# EUROPEAN PATENT APPLICATION

(11) **EP 4 706 996 A1**
(43) Date of publication of application: **11.03.2026**
(21) Application number: 25197581.9
(22) Date of filing: 22.08.2025
(51) Int. Cl.: B60C 23/04, B29D 30/00, B60C 23/06, B60C 19/00, B60C 9/02, B60C 15/06

(54) **TIRE, METHOD AND SYSTEM INTEGRATING A SENSOR AT A RIM FLANGE TRANSITION AREA OF A TIRE BY CAVITY FORMATION**

(30) Priority: 29.08.2024 US 202463688576 P; 29.07.2025 US 202519283856
(71) Applicant: The Goodyear Tire & Rubber Company, Akron, OH 44316 (US)
(72) Inventor: WEST, Jeffrey McKay, Uniontown, 44685 (US); GLICKSTEIN, Jarred, Akron, 44316 (US)
(74) Representative: Kutsch, Bernd

(57) **Abstract**

A system and a tire (100) is disclosed. The tire comprises a bead (124) of the tire (100), a ply (127) that wraps around the bead (124), a liner (133) of the tire (100), a chafer (121) configured to at least partially form a seal with a rim flange (209) of a wheel, an electronic device (106) located between the chafer (121) and the ply (127) at an axially outward side of the ply (127), a communication device (109) located between the liner (133) and the ply (127) at an axially inward side of the ply (127), and a connector (112) that communicatively and electrically connects the electronic device (106) and the communication device (109). Als, a method is disclosed comprising: positioning an electronic device (106) between a chafer (121) and a ply (127) of a tire (100) at an axially outward side of the ply (127), wherein the chafer (121) is configured to at least partially form a seal with a rim flange (209) of a wheel; positioning a communication device (109) between a liner (133) and the ply (127) at an axially inward side of the ply (127); and connecting a connector (112) between the electronic device (106) and the communication device (109).

## Description

### BACKGROUND

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

Often it is desirable to collect electronic data about the conditions in and around the tire. Such data can be communicated to the various different electronic systems of the vehicle, such as vehicle stability and/or braking systems, in order to provide improved control of the vehicle as well as to monitor or track driving behavior.

### SUMMARY OF THE INVENTION

The invention relates to a tire in accordance with claim 1, to a method in accordance with claim 6, and to a system in accordance with claim 12.

Dependent claims refer to preferred embodiments of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is a cross-sectional perspective view of a tire and a rim according to various embodiments of the present invention.
FIG. 2 is a cross-sectional view of a tire according to various embodiments of the present invention.
FIG. 3 is a flowchart illustrating how a communication device can be integrated within a tire according to various embodiments of the present invention.

### DEFINITIONS

"Axial" and "axially" mean lines or directions that are parallel to the axis of rotation of the tire.

"Axially inward" and "axially inwardly" include an axial direction that is toward the axial center of the tire.

"Axially outward" and "axially outwardly" include an axial direction that is away from the axial center of the tire.

"Bead" means that part of the tire comprising an annular tensile member wrapped by ply cords and shaped, with or without other reinforcement elements such as flippers, chippers, apexes, toe guards and chafers, to fit the design rim.

"CAN bus" is an abbreviation for controller area network.

"Carcass" means the tire structure apart from the belt structure, tread, undertread, and sidewall rubber over the plies, but including the beads.

"Circumferential" means lines or directions extending along a perimeter of a surface perpendicular to the axial direction.

"Equatorial plane (EP)" means the plane perpendicular to the tire's axis of rotation and passing through the center of its tread.

"Inboard side" means the side of the tire nearest the vehicle when the tire is mounted on a wheel and the wheel is mounted on the vehicle.

"Innerliner" means the layer or layers of elastomer or other material that form the inside surface of a tubeless tire and that contain the inflating fluid within the tire.

"Lateral" means an axial direction.

"Lateral edges" means a line tangent to the axially outermost tread contact patch or footprint as measured under normal load and tire inflation, the lines being parallel to the equatorial centerplane.

"Outboard side" means the side of the tire farthest away from the vehicle when the tire is mounted on a wheel and the wheel is mounted on the vehicle.

"Radial" and "radially" mean lines or directions that are perpendicular to the axis of rotation of the tire.

"Radially inward" and "radially inwardly" include a radial direction that is toward the central axis of rotation of the tire.

"Radially outward" and "radially outwardly" include a radial direction that is away from the central axis of rotation of the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

### DETAILED DESCRIPTION OF PREFERRED EMBODIMENTS OF THE INVENTION

Disclosed herein are various examples related to systems and methods for integrating sensors at a rim flange transition area of a tire during the tire manufacturing process. Reference will now be made in detail to the description of the embodiments as illustrated in the drawings, wherein like reference numbers indicate like parts throughout the several views.

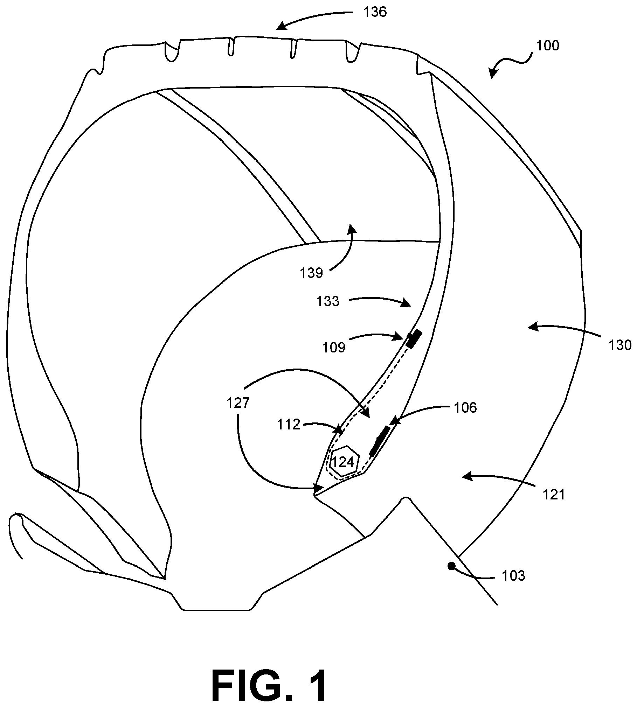

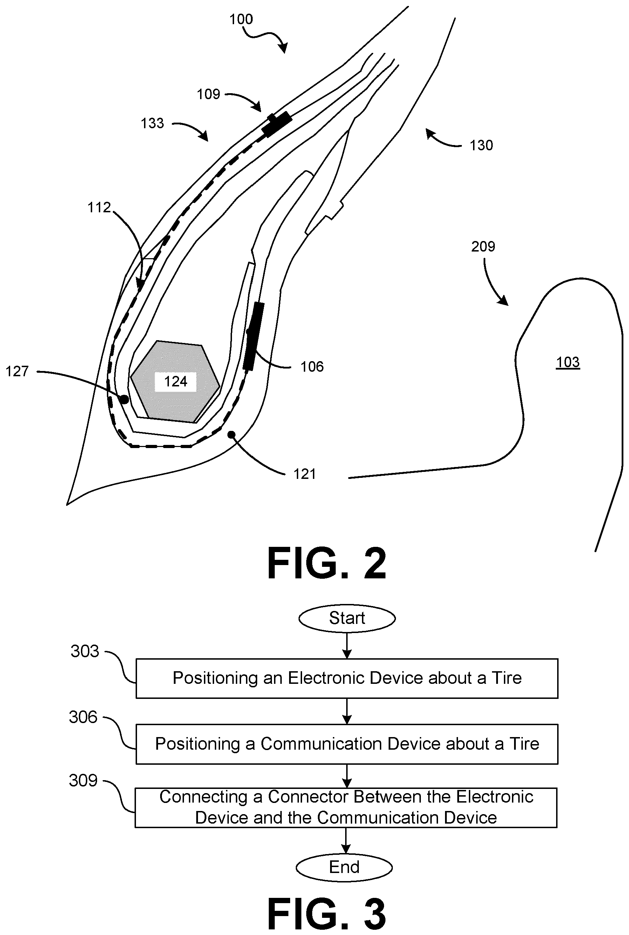

With reference to FIG. 1, shown is a cross-sectional perspective view of a tire 100, a rim 103, an electronic device 106, a communications device 109, and a connector 112. The electronic device 106 can be integrated with the tire 100 at a rim flange transition area, such that the tire-internal position of the electronic device 106 is covered by a surface of the tire 100 in the rim flange transition area. The rim flange transition area can include an area of the tire 100 where that makes contact with at least a portion of a rim flange 209 (FIG. 2) of the rim 103. The rim flange transition area can make contact with at least a portion of a rim flange 209 of the rim 103 when the tire 100 is seated in some examples. The rim flange transition area can make contact with at least a portion of a rim flange of the rim 103 when the tire 100 is under load of a vehicle sitting and/or in motion. As a result, in some examples an electronic device 106 that is integrated with the tire 100 at a rim flange transition area can be concealed and protected by at least a portion of the rim flange 209 of the rim 103. In further examples, the entirety of the electronic device 106 can be concealed and protected by at least a portion of the rim flange 209 of the rim 103.

The tire 100 can include a commercial tire 100 for a commercial rim 103, a consumer tire 100 for a consumer rim 103, an industrial tire for an industrial vehicle rim, and so on. A consumer rim 103 can generally have a more vertical rim flange 209 while a commercial rim 103 can have a slant or angle axially outward relative to a consumer rim 103. The sensor integrations described herein can be applied to any tire 100 and rim 103 combination.

The tire 100 can include a chafer 121, a bead 124, a ply 127, a sidewall 130, a liner 133, tread 136, as well as tire reinforcement components 139. The chafer 121 can include an extruded component that wraps around the bead area and bead 124 of the tire. The chafer 121 can interface with the rim 103 of a wheel to form a seal between the tire 100 and wheel, for example, using a rim flange 209. The chafer 121 can be made from an abrasion resistant rubber that enables it hold up to the wear the rim 103 exerts on the tire 100.

The bead 124 can include a wire that can be designed to have a predetermined tensile strength to provide the structure to hold the tire 100 to the rim 103 of the wheel. The bead 124 can be coated with rubber and can include a cross section with a predetermined diameter and a predetermined number of sides (or can be round). The bead 124 can also include a predetermined number of turns.

The liner 133 can include a calendared sheet of rubber that covers the inside of the tire. The liner 133 can be made from materials that allow the tire to hold the air pressure within the tire.

The ply 127 can include a calendared sheet of rubber coated fabric and/or cords. In some examples, the other components of the tire 100 can be either directly or indirectly connected to the ply 127. The ply 127 can wrap around the bead 124 on both sides of the tire 100 and gives the tire 100 its strength and the ability to flex without losing its shape.

The sidewall 130 can include an extruded component that can form a visible external portion of the tire 100. The sidewall 130 can protect the ply 127 from the environment, is abrasion resistant, and provides a substrate for the lettering and decorations to be molded into the tire. Sidewalls can have multiple compounds included in different zones such as a zone of white rubber for white sidewall tires.

Tread 136 can include an extruded component. Tread 136 can be made from a wide range of compounds based on the application of the tire 100. Tread 136 can provide a substrate for the tread pattern to be molded into the tire 100. The tread 136 contacts the road and gives the tire 100 grip to accelerate, stop, and corner. The tread 136 also provides cushioning for a smooth ride.

The tire reinforcement components 139 can refer to one or more calendared sheets of rubber or rubber-coated materials. For example, tire reinforcement components 139 can include belts and overlay. Belts can include rubber-coated steel wire and overlay can include rubber coated fabric. The belt tire reinforcement components 139 can help provide rigidity, strength, and puncture resistance to the crown area of the tire. Many tires include overlay which is wrapped around the tire and covers the belts. The overlay tire reinforcement components 139 can help improve the speed capabilities of high-performance tires.

A commercial, consumer, or industrial tire 100 can be designed to handle a wide range of purposes and driving conditions. For example, a tire 100 can be designed for off road performance, high speed performance, heavy load carrying, and all-season driving conditions, and so on. As a result of the variety of tire types, the manufacturing processes can produce a wide variety of rubber compounds and components that can be combined into a tire 100. Generally, a manufacturing process can include mixing, extrusion, calendering, building, curing, and post-curing stages. The mechanisms described herein for integrating sensors (e.g., electronic device 106) at a rim flange transition area of a tire 100 can include integration at the building stage.

In the mixing stage natural and/or synthetic rubbers can be mixed with other chemicals to create a rubber compound that serves a particular function within the tire 100. Many versions of rubber compounds can be used based on location in the tire 100 and the tire performance or purpose. The various ingredients can be mixed in predetermined amounts according to a predetermined specification. In the extrusion stage, some of the mixed rubber compound can be extruded or pushed through a die to create shapes made of one or more different compounds in different locations to be used in the tire 100. This can include tread extrusions and sidewall extrusions, among others. In the calendering stage, rubber can be calendered or pressed into a rubber sheet and/or impregnated into fabric or steel to create a rubber coated reinforced sheet to be cut into components for the tire 100. Examples of resulting tire components include inner liner, body plies, and belts. There are many versions of fabric and steel as well as compounds that can be used based on the type and service of the tire 100. In the tire building stage, the various components are combined together to create an uncured (green) tire 100. The green tire can be assembled in a particular order, for example, from the inside out. This can include wrapping the various components around a drum and forcing them together using internal air pressure and rollers pressing from the outside to consolidate the components together into a green tire 100. The mechanisms described herein for integrating sensors and other electrical components including the electronic device 106, the communications device 109, and the connector 112 into the tire 100 during the tire building stage. For example, the electronic device 106, the communications device 109, and the connector 112 can be assembled outwardly from the ply, but inwardly with respect to other components of the tire 100. However, in some examples a portion of the communications device 109 can be exposed to the interior of the tire for pressure and/or temperature measurement with corresponding sensor(s) of the communications device 109. In the curing stage, the uncured or green tire 100 can be placed into a mold which is mounted into a press. The tire 100 can be loaded into the press and held in place, for example, using a bladder that can inflates into the tire at low pressure. The tire 100 can be held in place as a mold closes around the tire 100. Once closed, high pressure steam or gas can fill the bladder forcing the tire 100 into the mold. The tire 100 can take the final shape of the tire 100. The curing stage can also include applying heat energy to stimulate a chemical reaction between the rubber compounds and other materials.

The electronic device 106 can include a sensing element and/or an energy harvesting element. For example, the electronic device 106 can comprise one or more piezoelectric component or element configured to harvest energy and/or sense. In some examples, the piezoelectric components of the electronic device 106 can sense data that can be computed to obtain sensor parameter values based at least in part on flexion and other forces experienced by the piezoelectric component during motion of the tire 100. Accordingly, the electronic device 106 can be considered a sensor device in some examples. In some examples, the electronic device 106 can include a non-piezoelectric force transducer component can also experience the forces and harvest energy and/or sensor readings. The location of the electronic device 106 in the rim flange transition area or rim flange contact area of the tire 100 can enable the electronic device 106 to generate larger amount of energy relative to other areas of the tire 100. The electronic device 106 can include an energy storage device such as a capacitive storage device, a battery, or any combination thereof. A piezoelectric component can generate energy that is stored in the energy storage device to operate the electronic device 106.

The electronic device 106 can also detect certain real-time parameters of the tire 100. The placement of the electronic device 106 at a rim flange transition area can provide further utility because rim flange transition area is one location of the tire 100 where the forces are transferred from the tire 100 to the rim 103. This rim flange transition area can experience dynamic forces from flexion (e.g., axially, radially, or any combination thereof) about the rim flange 209, circumferential slipping and other circumferential motion between the rim 103 and the tire 100, as well as other axial, radial, and circumferential forces.

The electronic device 106 can be fully (or partially) sandwiched between the outward side of the ply 127 and the chafer 121 based at least in part on pressure applied by the rim flange 209. This can provide compressive strain to the piezoelectric component in the rim flange transition area. While the electronic device 106 can appear to be strongly held between the tire 100 and the rim 103 in a static manner, the forces can be dynamic in operational conditions. For example, compressive strain can increase and decrease based on rotation of the tire 100 and its interface with the road or travel surface. When the electronic device 106 is radially aligned with at least a portion of a contact zone or contact patch, the compressive forces and other strains applied to the electronic device 106 can be greater. The greater energy potential can be achieved while being more protected than in other areas of the tire 100. The rim flange transition area can also provide opportunity to measure forces that can indicate slipping of the tire 100 relative to the rim 103, which can be difficult to achieve using sensors placed in other areas.

The electronic device 106 can also obtain data that can enable the computation of values for parameters such as steering angle, tire slip relative to the road, tire slip relative to the rim 103, vehicle cornering force, and other parameters. These values can be generated using the strain and compressive forces experienced by the electronic device 106. In some examples, three orthogonal sensors can be used for three axis strain sensing.

In various examples, the electronic device 106 can include a three-dimensional inertial sensor, a two-dimensional inertial sensor, or a one-dimensional inertial sensor. The inertial sensor can include a micro-electromechanical system based sensor or another type of inertial sensor that generates inertia measurements associated with piezoelectric strain measurements of the electronic device 106. The inertial sensor can be located together with the piezoelectric strain sensors as part of the electronic device 106, thereby enabling the inertia measurements to be used for the decoupling calculations. Inertia measurements from other locations away from the electronic device 106 can be too far away to accurately perform the decoupling. The electronic device 106 can measure offset planar strain using two strain measurements in a plane. The electronic device 106 can measure a circumferential strain that is tangential to an axial axis of the tire 100 (and wheel), and a particular radial axis extending to the electronic device 106. The electronic device 106 can also measure radial strain. In various examples, the electronic device 106 can be held between the tire 100 and the rim 103 such that it is aligned with the radial axis or aligned at a known angle relative to the radial axis. In some examples, the sensor of the electronic device 106 that measures radial strain can be aligned in a plane formed by the radial axis and the axial axis. The inertia measurements can be used to calculate the three principal strain axes using the offset planar strain (e.g., strain values for circumferential strain and radial strain).

The communications device 109, electronic device 106, or another device can perform calculations using measurements from the sensors of the communications device 109 and the electronic device 106. For example, a device can calculate values for the three principal strain axes using measurements of the electronic device 106. Deformation values for the tire 100, load values, and other values can be generated as well. In some examples, tire pressure identified using a tire pressure sensor of the communications device 109 can be used for deformation and load value calculations. Load values can include circumferential, lateral, and radial load values can be generated. In some examples, at least one of the electronic device 106, communications device 109, another device, or any combination thereof, can include a memory or other data storage device that can store strain values and inertial values, among other sensor values.

The communications device 109 can communicate with or be used in an overall system that includes a tire pressure monitoring system (TPMS), an anti-lock braking system (ABS), a vehicle stability system, a traction control system, or other electronic system of a vehicle. The communications device 109 can wirelessly transmit the strain values, inertia values, and other sensor values to a vehicle system. To this end, the communications device 109 can include, for example, a Bluetooth^{®} low-energy (BLE) device or processor, an inertial sensor, and another types of components. The communications device 109 can also include a temperature sensor that can measure internal tire temperature in association with the tire pressure measurement. Accordingly, the communications device 109 can be considered a sensor device in some examples.

The communications device 109 can, in some examples, comprise a processor and memory to store tire identification (ID) information for each specific tire 100. For example, the tire ID can include manufacturing information for the tire 100, including the tire model; size information, such as rim size, width, and outer diameter; manufacturing location; manufacturing date; a treadcap code that includes or correlates to a compound identification; a mold code that includes or correlates to a tread structure identification, or other information. The tire ID may also include a service history or other information to identify specific features and parameters of each tire 100. The electronic device 106 can further include an antenna for wirelessly transmitting measured parameters and tire ID data to a remote device or processor for analysis, such as a processor integrated into a vehicle electronic control unit and/or a Controller Area Network (CAN) bus associated with the vehicle. In some examples, the communications device 109 is detachably attached to the electronic device 106 via the connector 112. For example, in some embodiments, the tire 100 can be manufactured to included only the electronic device 106 and the connector 112. As such, the communications device 109 can be connected to the connector 112 at a later time after the manufacturing of the tire 100.

The connector 112 can include an electrically conductive material or another type of communications channel. The connector 112 can provide for communication of sensor data as well as power from the electronic device 106 to the communications device 109. The communications device 109 can then store and/or transmit this data to a vehicle system or another external system external to the tire 100. The connector 112 can include at least one flexible conductor or other communications channel, which is flexible and expandible enough to withstand tire shaping, tire curing, and vehicular use in corresponding conditions. Additionally or alternatively to the flexible material composition, the connector 112 can include at least one flat zigzag, meander, or other flat patterned communication channel that provides further expansion and flexibility. As can be understood, while the communication channel pattern can be described as flat, it can become multidimensional once placed in the tire 100 during a tire building stage or process. Additionally or alternatively to the flexible material composition, the connector 112 can also include a coil, spiral, weave, or other three-dimensional patterned communication channel that provides further expansion and flexibility.

Moving to FIG. 2, shown is a cross-sectional view of a portion of a tire 100 and a portion the rim 103 corresponding to a rim flange 209. This figure can provide further detail with respect to the components of the tire 100, the rim 103, the electronic device 106, the communications device 109, and the connector 112. The shown portion of the tire 100 can include the chafer 121, the bead 124, the ply 127, the sidewall 130, and the liner 133. The chafer 121 can be shown by the darker area of the tire 100.

In this example, the electronic device 106 can be located between the chafer 121 and the ply 127. In other examples, the electronic device 106 can be located at least partially between the chafer 121 and the ply 127, and at least partially between the sidewall 130 and the ply 127. Multiple electronic devices 106 can be provided in the tire. The electronic devices 106 can be placed in the tire 100 during the manufacturing of the tire 100 as discussed, during a tire building process. In some embodiments, at least one internal sensor indentation (for example, in one or more of the chafer 121, the ply 127, the sidewall 130, or any combination thereof, is configured to receive and hold the electronic device 106. The electronic device 106 can be configured to fit the shape of the at least one sensor indentation. The at least one sensor indentation can include an alignment element configured to align the electronic device 106 in a predetermined orientation relative to the tire 100.

The electronic device 106 can include a covering made of at least one of rubber, plastic, metal, other material, or any combination thereof. The exterior of the covering can fit into the sensor indentation. In some examples, the covering can include a same or similar material as the chafer 121 (and/or sidewall 130). In some embodiments, the covering can include an elongated member configured to fit within a receiving hole in the sensor indentation. In some embodiments, the covering can include an adhesive or chemical agent on an internal side such that when the covering is fitted into the sensor indentation, the adhesive or chemical agent is in contact with the sensor indentation and secures the covering and the electronic device 106 in place. The covering can enable connection to the tire 100 using a vulcanization process. In some embodiments, an adhesive is disposed with the sensor indentation and secures the covering in place.

In this example, the communications device 109 can be located between the liner 133 and the ply 127. In other examples, the electronic device 106 can be located at least partially between the chafer 121 and the ply 127, and at least partially between the liner 133 and the ply 127. Multiple communications devices 109 can be provided in the tire. The communications devices 109 can be placed in the tire 100 during the manufacturing of the tire 100 as discussed, during a tire building process. In some embodiments, at least one internal sensor indentation (for example, in one or more of the chafer 121, the ply 127, the liner 133, or any combination thereof, is configured to receive and hold the communications device 109. The communications device 109 can be configured to fit the shape of the at least one sensor indentation. The at least one sensor indentation can include an alignment element configured to align the communications device 109 in a predetermined orientation relative to the tire 100.

The communications device 109 can include a covering made of at least one of rubber, plastic, metal, other material, or any combination thereof. The exterior of the covering can fit into the sensor indentation. In some examples, the covering can include a same or similar material as the chafer 121 (and/or liner 133) such that each side of the device matches the material of the tire component with which it makes contact. In some embodiments, the covering can include an elongated member configured to fit within a receiving hole in the sensor indentation. In some embodiments, the covering can include an adhesive or chemical agent on an internal side such that when the covering is fitted into the sensor indentation, the adhesive or chemical agent is in contact with the sensor indentation and secures the covering and the communications device 109 in place. The covering can enable connection to the tire 100 using a vulcanization process. In some embodiments, an adhesive is disposed with the sensor indentation and secures the covering in place.

This figure shows how the ply 127 can wrap around the bead 124 on both sides of the tire 100. The chafer 121 can surround the ply 127 at the internal perimeter of the tire 100. The sidewall 130 can connect to the ply 127 and the chafer 121, protecting the play 127 from the environment at an external side of the tire 100. The liner 133 can connect to the ply 127 and the chafer 121, providing an air-tight seal within the interior of the tire 100, in conjunction with the chafer 121 and other components of the tire 100.

Referring next to FIG. 3, shown is a flowchart that provides one example of how a communications device 109 can be integrated within a tire 100, according to various examples of the present invention. At step 303, an electronic device 106 is positioned about a tire 100. In various examples, the electronic device 106 can be positioned between a chafer 121 and a ply 127 of a tire 100 at an axially outward side of the ply 127. In various examples, the chafer 121 is configured to form a seal with a rim flange 209 of a rim 103. In various examples, the electronic device 106 is positioned during the pre-curing tire building process. At step 306, a communication device 109 is positioned about a tire 100. The communication device 109 can be positioned between a liner 133 and the ply 127 at an axially inward side of the ply 127. In various examples, the communication device 109 is positioned during the pre-curing tire building process. At step 309, a connector is positioned between the communication device 109 and the electronic device 106. In various examples, the connector 112 is positioned between the communications device 109 and the electronic device 106 during the pre-curing tire building process.

In addition to the foregoing, the various embodiments of the present invention include the embodiments set forth in the following clauses.

Clause 1. A tire, comprising: a bead of the tire; a ply that wraps around the bead; a liner of the tire; a chafer configured to form a seal with a rim flange of a wheel; an electronic device between the chafer and the ply at an axially outward side of the ply; a communication device between the liner and the ply at an axially inward side of the ply; and a connector that communicatively and electrically connects the electronic device and the communication device.

Clause 2. The tire of claim 1, wherein the electronic device comprises at least one piezoelectric component.

Clause 3. The tire of clause 2, wherein the at least one piezoelectric component performs at least one of: energy harvesting, sensing, parameter measurement, or any combination thereof.

Clause 4. The tire of any one of clauses 1 to 3, wherein the electronic device comprises an inertia sensor that generates inertia measurements associated with piezoelectric strain measurements of the electronic device.

Clause 5. The tire of any one of clauses 1 to 4, wherein the communication device comprises at least one of a tire pressure sensor, a temperature sensor, or any combination thereof.

Clause 6. The tire of any one of clauses 1 to 5, wherein the communication device comprises a Bluetooth Low Energy (BLE) device that wirelessly transmits at least one sensor value the at least one sensor value generated using at least one sensor of the electronic device, the communication device, or any combination thereof.

Clause 7. The tire of any one of clauses 1 to 6, wherein the connector comprises at least one of: a spiral shaped connection, a zigzag shaped connection, or any combination thereof.

Clause 8. A method, comprising: positioning an electronic device between a chafer and a ply of a tire, at an axially outward side of the ply, wherein the chafer is configured to form a seal with a rim flange of a wheel; positioning a communication device between a liner and the ply at an axially inward side of the ply; and connecting a connector between the electronic device and the communication device.

Clause 9. The method of clause 8, further comprising: attaching the tire to the wheel, wherein the electronic device is sandwiched between the axially outward side of the ply and the chafer.

Clause 10. The method of clause 8 or clause 9, wherein the electronic device comprises at least one of at least one piezoelectric component or at least one inertia sensor component.

Clause 11. The method of any one of clauses 8 to 10, wherein the electronic device is positioned during a pre-curing tire building process, the communication device is positioned during the pre-curing tire building process, and the connector is connected during the pre-curing tire building process.

Clause 12. The method of any one of clauses 8 to 11, wherein the communication device comprises at least one of a tire pressure sensor, a temperature sensor, or any combination thereof.

Clause 13. The method of any one of clauses 8 to 12, wherein the communication device comprises a Bluetooth Low Energy (BLE) device that wirelessly transmits at least one sensor value the at least one sensor value generated using at least one sensor of the electronic device, the communication device, or any combination thereof.

Clause 14. The method of any one of clauses 8 to 13, wherein the connector comprises at least one of: a spiral shaped connection, a zigzag shaped connection, or any combination thereof.

Clause 15. A system comprising: an electronic device positioned between a chafer and a ply of a tire, at an axially outward side of the ply, wherein the chafer is configured to form a seal with a rim flange of a wheel; a communication device positioned between a liner and the ply at an axially inward side of the ply; and connector connected between the electronic device and the communication device.

Clause 16. The system of clause 15, wherein the electronic device comprises at least one piezoelectric component and at least one inertia sensor component.

Clause 17. The system of clause 15 or clause 16, wherein the electronic device is positioned during a pre-curing tire building process, the communication device is positioned during the pre-curing tire building process, and the connector is connected during the pre-curing tire building process.

Clause 18. The system of any one of clauses 15 to 17, wherein the communication device comprises at least one of a tire pressure sensor, a temperature sensor, or any combination thereof.

Clause 19. The system of any one of clauses 15 to 18, wherein the communication device comprises a Bluetooth Low Energy (BLE) device that wirelessly transmits at least one sensor value the at least one sensor value generated using at least one sensor of the electronic device, the communication device, or any combination thereof.

Clause 20. The system of any one of clauses 15 to 20, wherein the connector comprises at least one of: a spiral shaped connection, a zigzag shaped connection, or any combination thereof.

## Claims

1. A tire comprising a bead (124) of the tire (100), a ply (127) that wraps around the bead (124), a liner (133) of the tire (100), a chafer (121) configured to at least partially form a seal with a rim flange (209) of a wheel, an electronic device (106) located between the chafer (121) and the ply (127) at an axially outward side of the ply (127), a communication device (109) located between the liner (133) and the ply (127) at an axially inward side of the ply (127), and a connector (112) that communicatively and electrically connects the electronic device (106) and the communication device (109).

2. The tire of claim 1, wherein the electronic device (106) comprises at least one piezoelectric component, the at least one piezoelectric component preferably performing at least one of: energy harvesting, sensing, parameter measurement, or any combination thereof.

3. The tire of claim 1 or 2, wherein the electronic device (106) comprises an inertia sensor that generates inertia measurements associated with piezoelectric strain measurements of the electronic device; and/or wherein the communication device (109) comprises at least one of a tire pressure sensor, a temperature sensor, or any combination thereof.

4. The tire of at least one of the previous claims, wherein the communication device (109) comprises a Bluetooth Low Energy (BLE) device that is configured to wirelessly transmit at least one sensor value, the at least one sensor value being generated using at least one sensor of the electronic device (106), the communication device (109), or any combination thereof.

5. The tire of at least one of the previous claims, wherein the connector (112) comprises at least one of: a spiral shaped connection, a zigzag shaped connection, or any combination thereof.

6. A method comprising: positioning an electronic device (106) between a chafer (121) and a ply (127) of a tire (100) at an axially outward side of the ply (127), wherein the chafer (121) is configured to at least partially form a seal with a rim flange (209) of a wheel; positioning a communication device (109) between a liner (133) and the ply (127) at an axially inward side of the ply (127); and connecting a connector (112) between the electronic device (106) and the communication device (109).

7. The method of claim 6, further comprising: attaching the tire (100) to the wheel, wherein the electronic device (106) is sandwiched between the axially outward side of the ply (127) and the chafer (121).

8. The method of claim 6 or 7, wherein the electronic device (106) comprises at least one of at least one piezoelectric component or at least one inertia sensor component; and/or wherein the communication device (109) comprises at least one of a tire pressure sensor, a temperature sensor, or any combination thereof.

9. The method of at least one of the claims 6 to 8, wherein the electronic device (106) is positioned during a pre-curing tire building process, the communication device (109) is positioned during the pre-curing tire building process, and the connector (112) is connected during the pre-curing tire building process.

10. The method of at least one of the claims 6 to 9, wherein the communication device (109) comprises a Bluetooth Low Energy (BLE) device that wirelessly transmits at least one sensor value the at least one sensor value generated using at least one sensor of the electronic device (106), the communication device (109), or any combination thereof.

11. The method of at least one of the claims 6 to 10, wherein the connector (112) comprises at least one of: a spiral shaped connection, a zigzag shaped connection, or any combination thereof.

12. A system comprising: an electronic device (106) positioned between a chafer (121) and a ply (127) of a tire (100) at an axially outward side of the ply (127), wherein the chafer (121) is configured to at least partially form a seal with a rim flange (209) of a wheel; a communication device (109) positioned between a liner (133) and the ply (127) at an axially inward side of the ply (127); and a connector (112) connected between the electronic device (106) and the communication device (109).

13. The system of claim 12, wherein the electronic device (106) comprises at least one piezoelectric component and at least one inertia sensor component; and/or wherein the communication device (109) comprises at least one of a tire pressure sensor, a temperature sensor, or any combination thereof.

14. The system of claim 12 or 13, wherein the communication device (109) comprises a Bluetooth Low Energy (BLE) device that is configured to wirelessly transmit at least one sensor value, the at least one sensor value being generated using at least one sensor of the electronic device (106), the communication device (109), or any combination thereof.

15. The system of claim 12, 13 or 14, wherein the connector (112) comprises at least one of: a spiral shaped connection, a zigzag shaped connection, or any combination thereof.
